Europäisches Patentamt

European Patent Office

Office européen des brevets

(11) Numéro de publication: **0 338 943**
A1

## DEMANDE DE BREVET EUROPEEN

(21) Numéro de dépôt: **89420099.7**

(22) Date de dépôt: **17.03.89**

(51) Int. Cl.⁴: **B 01 D 29/26**
B 01 D 29/32, B 01 D 29/42

(30) Priorité: **18.03.88 FR 8804117**

(43) Date de publication de la demande:
**25.10.89 Bulletin 89/43**

(84) Etats contractants désignés: **ES GR IT SE**

(71) Demandeur: **Bancel, Alexandre Claudius Clément**
**1 Impasse du Tonkin**
**F-69290 Craponne (FR)**

(72) Inventeur: **Bancel, Alexandre Claudius Clément**
**1 Impasse du Tonkin**
**F-69290 Craponne (FR)**

(74) Mandataire: **Bratel, Gérard et al**
**Cabinet GERMAIN & MAUREAU B.P. 3011**
**F-69392 Lyon Cédex 03 (FR)**

(54) Préfiltre à fermentation épurateur d'effluents polluants.

(57) Le préfiltre à fermentation épurateur d'effluents polluants tels que les eaux usées est constitué par une cuve de filtrage (1) mobile, transportable et alimentée en effluents polluants dirigés ensuite, une fois assainis, vers un réseau d'épandage souterrain. L'extrémité supérieure ouverte de la cuve (1) est obturée, en cours d'utilisation, par un couvercle (3) amovible présentant un orifice (4) d'entrée des effluents polluants. Une ouverture (7) pour l'écoulement des effluents assainis est ménagée dans la paroi latérale (6) de la cuve (1) au voisinage du couvercle (3), tandis que sont prévus, à l'intérieur de la cuve (1), sur le trajet des effluents entre l'orifice (4) et l'ouverture (7), deux tamis coaxiaux intérieur (8) et extérieur (9), le tamis (9) étant fixé au couvercle (3) et le tamis (8) étant monté coulissant axialement par rapport au tamis (9).

Application aux installations individuelles et collectives d'assainissement des eaux usées et à l'épuration des jus de décharge d'ordures.

FIG.1

EP 0 338 943 A1

Bundesdruckerei Berlin

## Description

## PREFILTRE A FERMENTATION EPURATEUR D'EFFLUENTS POLLUANTS

La présente invention concerne un préfiltre à fermentation épurateur d'effluents polluants tels que les eaux usées notamment les eaux ménagères et les eaux des toilettes des habitations ou des terrains de camping qui ne sont pas évacuées et traitées par un système d'assainissement collectif du fait de leur isolement par rapport aux concentrations urbaines.

A un niveau individuel et autonome, deux solutions sont actuellement connues pour régler ce problème d'assainissement des eaux usées.

La première solution consiste à réunir les eaux de toilettes et les eaux ménagères et à les traiter dans une fosse septique dite "toutes eaux", puis à les évacuer par épandage souterrain, le sol assurant l'épuration définitive de ces effluents.

Un tel type de fosse septique toutes eaux exige un entretien très contraignant pour obtenir une épuration satisfaisante des effluents et éviter ainsi toute pollution souterraine. Il est notamment nécessaire de vidanger et de nettoyer cette fosse toutes eaux tous les deux à trois mois, ce qui équivaut à des opérations très désagréables, rebutantes et également peu commodes à effectuer, puisqu'elles nécessitent une intervention manuelle.

Le niveau des boues dans la fosse toutes eaux doit également être vérifié tous les ans.

La deuxième solution consiste à traiter, dans un premier temps, les deux effluents de manière séparée, les eaux des toilettes par une fosse septique et les eaux ménagères par un bac séparateur de graisses. Dans un deuxième temps, l'ensemble des eaux transite dans un préfiltre fixé à demeure sur le site avant d'être évacué par épandage souterrain.

Là encore, il est indispensable de nettoyer les éléments filtrants du préfiltre afin de lui assurer un fonctionnement correct.

Les inconvénients majeurs d'entretien existent toujours et, dans les deux cas, ils impliquent que généralement les utilisateurs négligent de procéder à ces opérations difficiles et désagréables, voire même suppriment les éléments filtrants dans le cas de la deuxième solution.

La conséquence directe est donc que l'installation d'assainissement ne fonctionne plus ou mal, ce qui a pour résultat de colmater le réseau d'épandage et de polluer l'environnement. Compte tenu des quantités énormes d'effluents à traiter, on imagine aisément les conséquences désastreuses à grande échelle d'un tel disfonctionnement.

Il faut signaler, en outre, que les boues recueillies après nettoyage possèdent encore un pouvoir polluant important. Elles imposent donc théoriquement un autre traitement dans un autre site approprié, ce qui engendre notamment des problèmes de transport et des coûts prohibitifs.

Compte tenu de cela, la solution retenue est la dépose pure et simple, sans précautions particulières, des boues dans l'environnement, qui se trouve ainsi une nouvelle fois, souillé.

Finalement, le problème de l'assainissement autonome et individuel reste entier.

Le but essentiel de la présente invention est de remédier aux inconvénients précités en procurant un préfiltre épurateur d'effluents polluants remplaçant le préfiltre fixe de la deuxième solution, intervenant juste avant l'épandage souterrain et permettant de diminuer la charge polluante des effluents, tout en évitant les problèmes d'entretien contraignant.

Un autre but de l'invention est de fournir un préfiltre ne nécessitant pas d'énergie autre que gravitaire pour son fonctionnement.

A cet effet, le préfiltre à fermentation épurateur d'effluents polluants objet de l'invention est constitué par une cuve de filtrage mobile, transportable, comportant un fond et une paroi latérale et alimentée en effluents polluants destinés à être assainis et susceptibles d'être ensuite dirigés vers un réseau d'épandage souterrain, la cuve ayant son extrémité supérieure ouverte obturée, en cours d'utilisation, par un couvercle amovible présentant un orifice pour l'entrée des effluents polluants et une ouverture pour l'écoulement des effluents assainis étant ménagée dans la paroi latérale de la cuve au voisinage du couvercle, tandis que sont prévus, à l'intérieur de la cuve, des moyens de filtrage conçus comme au moins une barrière perméable rencontrée par les effluents introduits dans la cuve sur le trajet entre l'orifice d'entrée et l'ouverture d'écoulement, ces moyens de filtrage étant reliés à la face intérieure du couvercle.

Ces dispositions permettent un déplacement aisé du préfiltre en vue du recueillement des boues lors de son nettoyage, qui s'effectue également commodément du fait qu'il est possible d'extraire les moyens de filtrage avec le couvercle et de les rendre ainsi tout à fait accessibles.

En outre, il n'est pas possible à l'utilisateur de supprimer les moyens de filtrage, car ils font partie intégrante du préfiltre de par leur liaison permanente avec le couvercle.

Sans apport d'énergie extérieure, le préfiltre permet une épuration des effluents polluants et des boues de filtration donnant des résultats de qualité supérieure à ceux des installations d'assainissement individuelles et collectives existantes.

Enfin, les moyens de filtrage permettent de créer à l'intérieur de la cuve les conditions nécessaires à une action biologique transformant les matières organiques en éléments minéraux.

De préférence, les moyens de filtrage se composent d'au moins deux tamis essentiellement cylindriques et coaxiaux, respectivement intérieur et extérieur, dont les extrémités inférieures sont en contact avec le fond de la cuve en cours d'utilisation, au moins l'un de ces tamis étant lié au couvercle par son extrémité supérieure.

Afin de faciliter le nettoyage des deux tamis en permettant leur non-recouvrement au cours de celui-ci, l'un seulement des deux tamis est fixé, par son extrémité supérieure, sur la face intérieure du couvercle, tandis que l'autre tamis est monté coulissant axialement par rapport au précédent.

Suivant une caractéristique intéressante, le tamis fixé au couvercle est muni, à son extrémité inférieure, de moyens de retenue aptes à coopérer avec des moyens prévus sur l'extrémité supérieure de l'autre tamis monté coulissant de manière à permettre l'arrêt du coulissement et la retenue de cet autre tamis, lors du retrait du couvercle hors de la cuve.

Par cette disposition, les tamis se décalent totalement l'un par rapport à l'autre, lorsqu'on les retire de la cuve, mais restent néanmoins liés. Il est donc facile de les nettoyer mécaniquement en les brossant l'un et l'autre par l'intérieur.

En outre, les deux tamis sont équipés chacun sur toute la périphérie de leur extrémité inférieure d'un renflement annulaire d'étanchéité, destiné à s'appliquer sur le fond de la cuve en position d'utilisation.

Le fond de la cuve sur lequel reposent les extrémités inférieures des deux tamis peut être soit un fond fixe, soit un fond amovible, cette dernière possibilité facilitant encore les opérations de nettoyage.

De préférence, chaque tamis est équipé d'une série de renforts circonférentiels et/ou d'une série de renforts disposés selon les génératrices.

Suivant une caractéristique avantageuse, l'ouverture des mailles du tamis intérieur est supérieure à celle des mailles du tamis exterieur. Par exemple, l'ouverture des mailles du tamis intérieur est comprise entre 1 et 2 mm, de préférence de l'ordre de 1 ,5 mm et l'ouverture des mailles du tamis extérieur est comprise entre 0,5 et 1,5 mm de préférence.

Pour une dépollution encore plus performante des effluents intro duits dans la cuve, l'ouverture d'écoulement est équipée d'au moins un filtre. L'ouverture des mailles du filtre est avantageusement comprise entre 0,3 et 0,7 mm, de préférence de l'ordre de 0,5 mm.

Afin de pouvoir remplacer le filtre sale par un filtre propre en cours de fonctionnement de l'installation d'assainissement, l'ouverture d'écoulement de la cuve est conçue comme un boîtier pouvant recevoir simultanément au moins deux filtres amovibles, de sorte qu'un filtre propre peut être mis en place avant d'enlever le filtre sale. Le boîtier peut également recevoir un volet plein amovible permettant son obturation, pour les impératifs de manutention et de transport. Dans le même but, il est prévu aussi, de préférence, des moyens d'obturation de l'orifice d'entrée des effluents polluants. Ceci permet d'éviter les pertes de liquide lors du déplacement du préfiltre.

Enfin, le préfiltre est avantageusement équipé d'un indicateur du niveau de remplissage de la cuve.

De toute façon, l'invention sera bien comprise et d'autres avantages ressortiront à l'aide de la description qui suit, de deux exemples de réalisation non limitatifs du préfiltre épurateur en référence au dessin annexé dans lequel :

Figure 1 est une vue schématique en coupe axiale verticale d'une première forme d'exécution du préfiltre épurateur ;

Figure 2 est une vue schématique en coupe axiale verticale du couvercle du préfiltre muni de ses deux tamis de filtrage ;

Figure 3 est une vue schématique en coupe axiale verticale d'une deuxième forme d'exécution du préfiltre épurateur.

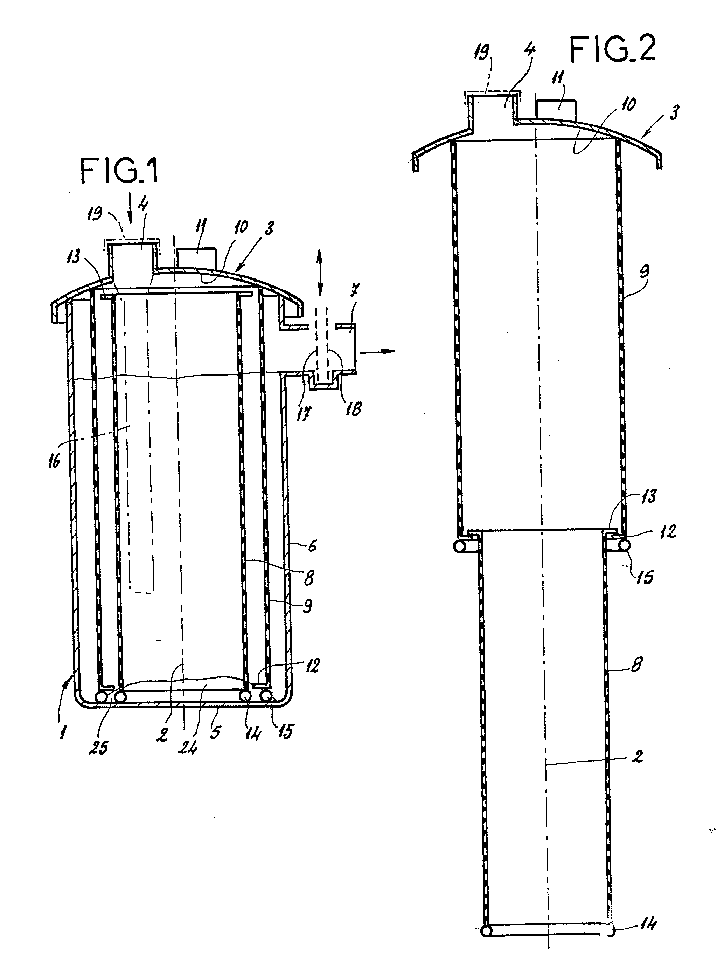

La figure 1 représente le préfiltre épurateur qui est constitué par une cuve de filtrage 1, réalisée en tout matériau approprié notamment en matière plastique, de forme essentiellement cylindrique et d'axe vertical 2, cette cuve 1 étant mobile et transportable.

L'extrémité supérieure ouverte de la cuve 1 est obturée, en cours d'utilisation, par un couvercle 3 amovible présentant un orifice 4 d'entrée des eaux usées à traiter. La cuve de filtrage 1 comporte un fond plat 5 et une paroi latérale 6 présentant, dans sa partie supérieure au voisinage du couvercle 3, une ouverture 7 d'écoulement des eaux assainies.

Dans cet exemple, le couvercle 3 repose sur le bord de l'ouverture supérieure de la cuve de filtrage 1, mais il pourrait également être fixé de façon démontable sur celle-ci par tout moyen approprié notamment par vissage.

Des moyens de filtrage sont prévus à l'intérieur de la cuve 1. Ils sont constitués par deux tamis 8 et 9 cylindriques tubulaires coaxiaux, à savoir un tamis intérieur 8 et un tamis extérieur 9, dont l'axe vertical commun est confondu avec l'axe 2 de la cuve 1, la hauteur de chacun de ces tamis 8 et 9 étant sensiblement égale à la hauteur de la cuve 1.

Le tamis extérieur 9 est fixé, par son extrémité supérieure, sur la face intérieure 10 du couvercle 3 et le tamis intérieur 8 est monté coulissant axialement par rapport au tamis extérieur 9.

L'agencement télescopique de ces deux tamis 8 et 9 ressort clairement de la figure 2, sur laquelle est représenté le couvercle 3 extrait de la cuve 1 au moyen d'un anneau de levage 11. Sous l'effet de son propre poids, le tamis intérieur 8 se décale totalement par rapport au tamis extérieur 9. Un rebord annulaire 12 dirigé vers l'intérieur, ménagé sur l'extrémité inférieure du tamis extérieur 9, et un rebord annulaire 13 dirigé vers l'extérieur ménagé sur l'extrémité supérieure du tamis intérieur 8 forment des moyens de retenue complémentaires qui arrêtent le déplacement vers le bas du tamis intérieur 8, monté coulissant, et qui empêchent, en outre, la rotation d'un tamis par rapport à l'autre. Ces dispositions facilitent le nettoyage mécanique des deux tamis souillés après utilisation.

Les deux tamis 8 et 9 sont pourvus chacun sur toute la périphérie de leur extrémité inférieure de renflements annulaires d'étanchéité désignés respectivement par 14 et 15. En cours d'utilisation, le tamis intérieur 8 est entièrement rentré dans le tamis extérieur 9 et les deux tamis reposent sur le fond 5 de la cuve 1 par leurs renflements annulaires d'étanchéité respectifs 14 et 15, comme le montre la figure 1.

Les deux tamis intérieur 8 et extérieur 9 constituent des barrières de filtrage successives sur le trajet des eaux usées entre l'orifice 4 d'entrée et l'ouverture 7 d'écoulement, l'orifice 4 d'entrée débouchant à l'intérieur du tamis intérieur 8 et le cloisonnement entre les différentes chambres concentriques définies par les tamis 8 et 9 étant étanches au niveau de leurs extrémités inférieures.

Selon une autre caractéristique, l'ouverture des mailles du tamis intérieur **8** comprise entre 1 et 2 mm, de préférence de l'ordre de 1,5 mm, est supérieure à celle des mailles du tamis extérieur **9** comprise entre 0,5 et 1,5 mm, de préférence de l'ordre de 1 mm.

Comme le montre la figure 1, l'orifice **4** d'entrée des eaux usées peut se prolonger à son extrémité inférieure par un conduit **1 6**, représenté en traits mixtes sur le dessin, qui plonge à l'intérieur du tamis intérieur **8**. Ce conduit peut être remplacé par un conduit d'amenée des eaux indépendant du couvercle **3** introduit au-travers de l'orifice **4** d'entrée.

L'ouverture **7** d'écoulement des eaux assainies est conçue comme un boîtier pouvant recevoir simultanément deux filtres amovibles **17, 18** qu'il est possible de retirer ou de mettre en place en cours d'utilisation du préfiltre épurateur. Ceci permet le remplacement d'un filtre sale par un filtre propre. L'ouverture des mailles de ces filtres **17, 18** est comprise entre 0,3 et 0,7 mm, de préférence de l'ordre de 0,5 mm. Le boîtier constituant l'ouverture **7** d'écoulement permet également la mise en place d'un volet plein amovible non représenté sur le dessin permettant l'obturation de l'ouverture **7** d'écoulement de façon à éviter les fuites de liquide lors du transport du préfiltre épurateur.

Dans ce même but, l'orifice **4** d'entrée est équipé pour recevoir un bouchon amovible **19** propre à l'obturer.

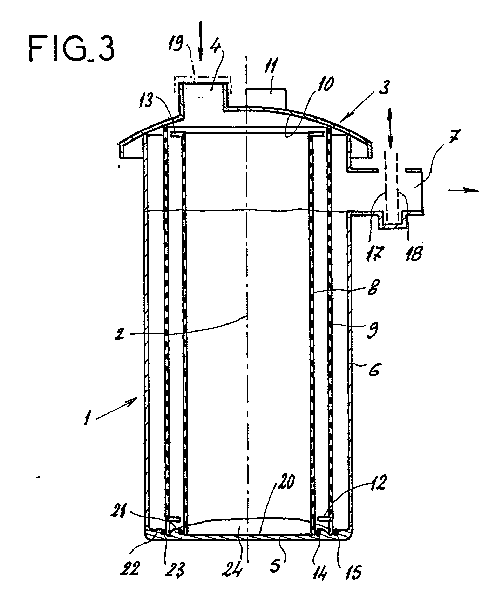

La figure 3 montre une variante d'exécution du préfiltre épurateur dans laquelle les éléments communs avec le mode de réalisation précédent sont désignés par les mêmes références.

Le préfiltre épurateur comporte une cuve de filtrage **1** fermée par un couvercle **3** relié comme précédemment aux tamis intérieur **8** et extérieur **9**.

Selon cette variante de l'invention, le fond **5** de la cuve **1** est monté amovible sur la paroi latérale **6**. Leur solidarisation peut être effectuée par tout moyen connu et approprié notamment par vissage de l'un des éléments sur l'autre.

Le fond **5** est muni sur sa face intérieure **20** d'une nervure annulaire **21** délimitant à l'extérieur, avec le bord périphérique **22** du fond **5**, une gorge annulaire **23**, et, à l'intérieur, une surface circulaire centrale.

L'extrémité inférieure du tamis extérieur **9** vient se loger, en cours d'utilisation, dans la gorge annulaire **23**, tandis que l'extrémité inférieure du tamis intérieur **8** repose sur la périphérie de la surface circulaire centrale contre la nervure annulaire **21**.

Ces extrémités inférieures sont éventuellement munies de renflements d'étanchéité **14** et **15**.

Pour expliquer le fonctionnement de ce préfiltre éparateur, on peut choisir l'exemple du traitement des effluents polluants d'une maison individuelle par une installation d'assainissement.

Dans ce cas, les effluents polluants ou eaux usées sont constitués, d'une part, par les eaux ménagères et, d'autre part, par les eaux de toilettes dont les matières fécales solides sont, par exemple, décantées dans une fosse septique et traitées de façon satisfaisante par celle-ci. Les eaux ménagères et les eaux de toilettes sont alors regroupées et amenées par un conduit dans le préfiltre épurateur au travers de son orifice **4** d'entrée. Les eaux usées s'écoulent d'abord au centre de la cuve de filtrage **1**. Les particules solides les plus grosses sont éliminées par le tamis intérieur **8** et les particules solides les plus fines sont éliminées par le tamis extérieur **9**.

Il s'effectue donc un dépôt principal **24** de boue sur le fond **5** à l'intérieur du tamis **8** et un dépôt secondaire **25** de boue sur le fond **5** entre les tamis intérieur **8** et extérieur **9**.

En cours d'utilisation, la cuve **1** est remplie jusqu'au niveau de l'ouverture **7** d'écoulement, fonctionnant comme un "trop-plein", et, à chaque nouvelle arrivée d'eaux usées, l'excédent de liquide est évacué par l'ouverture **7** au-travers du filtre **17** ou **18** vers un réseau d'épandage souterrain, le sol assurant l'épuration définitive des eaux s'écoulant du préfiltre épurateur.

Dans ce dispositif, la succession des filtres permet la rétention de matières solides et donc des micro-organismes commensaux, ce qui a pour effet de créer, à l'intérieur de la cuve **1**, les conditions optimales nécessaires à une activité biologique transformant les matières organiques polluantes de boues recueillies dans la cuve **1** en éléments minéraux.

Il est à noter que, dans cette installation d'assainissement, les eaux circulent et sont traitées uniquement sous l'effet de leur propre poids sans apport d'énergie extérieure.

En ce qui concerne l'entretien du préfiltre épurateur, il suffit de le déconnecter de l'installation, d'obturer l'orifice **4** d'entrée et l'ouverture **7** d'écoulement et de transporter le préfiltre vers un site de nettoyage. Son couvercle **3** et ses tamis **8** et **9** sont ensuite extraits de la cuve **2** et aisément lavés mécaniquement, tandis que les boues contenues dans la cuve **1** sont récupérées et utilisées dans diverses valorisations.

Au cours de cette opération d'entretien, l'installation d'assainissement peut continuer à fonctionner avec un autre préfiltre épurateur.

Le préfiltre épurateur selon l'invention peut également être utilisé soit pour traiter, notamment, les jus de décharge d'ordures ou des effluents industriels, soit dans une station d'épuration collective.

Comme il va de soi, l'invention n'est pas limitée aux exemples d'exécution du préfiltre décrits ci-dessus; elle en embrasse, au contraire, toutes les variantes de réalisation et d'application.

C'est ainsi qu'il pourrait être prévu un nombre plus important de tamis, que ces tamis pourraient présenter toute forme appropriée, que le tamis extérieur pourrait être monté coulissant sur le tamis intérieur fixé au couvercle, que les tamis pourraient être équipés de renforts circonférentiels et/ou disposés selon leurs génératrices, ces renforts pouvant coopérer pour assurer l'immobilisation en rotation d'un tamis par rapport à l'autre et qu'enfin, un indicateur de niveau de liquide dans la cuve pourrait être prévu.

## Revendications

1- Préfiltre à fermentation épurateur d'effluents polluants tels que les eaux usées, caractérisé en ce qu'il est constitué par une cuve de filtrage (1) mobile, comportant un fond (5) et une paroi latérale (6), transportable et alimentée en effluents polluants destinés à être assainis et susceptibles d'être ensuite dirigés vers un réseau d'épandage souterrain, la cuve (1) ayant son extrémité supérieure ouverte obturée, en cours d'utilisation, par un couvercle (3) amovible présentant un orifice (4) pour l'entrée des effluents polluants et une ouverture (7) pour l'écoulement des effluents assainis étant ménagée dans la paroi latérale (6) de la cuve (1) au voisinage du couvercle (3), tandis que sont prévus, à l'intérieur de la cuve (1), des moyens de filtrage (8,9) conçus comme au moins une barrière perméable rencontrée par les effluents introduits dans la cuve (1) sur le trajet entre l'orifice (4) d'entrée et l'ouverture (7) d'écoulement, ces moyens de filtrage (8,9) étant reliés à la face intérieure (10) du couvercle.

2- Préfiltre à fermentation selon la revendication 1, caractérisé et en ce que les moyens de filtrage se composent d'au moins deux tamis (8,9) essentiellement cylindriques et coaxiaux, respectivement intérieur (8) et extérieur (9), dont les extrémités inférieures (14, 15) sont en contact avec le fond (5) de la cuve (1) en cours d'utilisation, au moins l'un de ces tamis (9) étant lié au couvercle (3) par son extrémité supérieure.

3- Préfiltre à fermentation selon la revendication 2, caractérisé en ce que l'un (9) seulement des deux tamis (8,9) est fixé, par son extrémité supérieure, sur la face intérieure (10) du couvercle (3), tandis que l'autre tamis (8) est monté coulissant axialement par rapport au précédent.

4- Préfiltre à fermentation selon la revendication 3, caractérisé en ce que le tamis (9) fixé au couvercle (3) est muni, à son extrémité inférieure, de moyens de retenue (12) aptes à coopérer avec des moyens (13) prévus sur l'extrémité supérieure de l'autre tamis (8) monté coulissant de manière a permettre l'arrêt du coulissement et la retenue de cet autre tamis (8) lors du retrait du couvercle (3) hors de la cuve (1).

5- Préfiltre à fermentation selon l'une quelconque des revendications 2 à 4, caractérisé en ce que les deux tamis (8,9) sont équipés chacun sur toute la périphérie de leur extrémité inférieure d'un renflement annulaire d'étanchéité (14,15) destiné à s'appliquer sur le fond (5) de la cuve (1) en position d'utilisation.

6- Préfiltre à fermentation selon l'une quelconque des revendi cations 2 à 5, caractérisé en ce que chaque tamis **(8,9)** est équipé d'une série de renforts circonférentiels et/ou d'une série de renforts disposés selon les génératrices.

7- Préfiltre à fermentation selon l'une quelconque des revendications 2 à 6, caractérisé en ce que l'ouverture des mailles du tamis intérieur (8) est supérieure à celle des mailles du tamis extérieur (9).

8- Préfiltre à fermentation selon la revendication 7, caractérisé en ce que l'ouverture des mailles du tamis intérieur (8) est comprise entre 1 et 2 mm, de préférence de l'ordre de 1,5 mm.

9- Préfiltre à fermentation selon la revendication 7 ou la revendication 8, caractérisé en ce que l'ouverture des mailles du tamis extérieur (9) est comprise entre 0,5 et 1,5 mm, de préférence de l'ordre de 1 mm.

10- Préfiltre à fermentation selon l'une quelconque des revendications 1 à 9, caractérisé en ce que le fond (5) de la cuve (1) est monté amovible sur la paroi latérale (6) de la cuve (1).

11- Préfiltre à fermentation selon l'ensemble des revendications 5 et 10, caractérisé en ce que le fond amovible (5) de la cuve (1) est muni d'une nervure annulaire (21) délimitant, avec le bord périphérique (22) de ce fond (5), une gorge annulaire (23) dans laquelle se loge, en position d'utilisation, l'extrémité inférieure (15) du tamis extérieur (9), tandis que l'extrémité inférieure (14) du tamis intérieur (8) repose contre la nervure annulaire (21).

12- Préfiltre à fermentation selon l'une quelconque des revendications 1 à 11, caractérisé en ce que l'ouverture (7) d'écoulement de la cuve (1) est equipée d'au moins un filtre (17,18).

13- Préfiltre à fermentation selon la revendication 12, caractérisé en ce que l'ouverture des mailles du filtre (17,18) équipant l'ouverture (7) d'écoulement de la cuve (1) est comprise entre 0,3 et 0,7 mm, de préférence de l'ordre de 0,5 mm.

14- Préfiltre à fermentation selon la revendication 12 ou la revendication 13, caractérisé en ce que l'ouverture d'écoulement de la cuve (1) est conçue comme un boîtier (7) pouvant recevoir simultanément au moins deux filtres amovibles (17,18), de sorte qu'un filtre propre peut être mis en place avant d'enlever le filtre sale.

15- Préfiltre à fermentation selon la revendication 14, caractérisé en ce que le boîtier (7) peut recevoir un volet plein amovible permettant son obturation.

16- Préfiltre à fermentation selon l'une quelconque des revendications 1 à 1 5, caractérisé en ce qu'il est prévu des moyens d'obturation (19) de l'orifice (4) d'entrée du couvercle amovible (3).

17- Préfiltre à fermentation selon l'une quelconque des revendications 1 à 16, caractérise en ce qu'il est équipé d'un indicateur de niveau de remplissage de la cuve (1).

FIG_1

FIG_2

FIG.3

Office européen
des brevets

**RAPPORT DE RECHERCHE EUROPEENNE**

Numero de la demande

EP  89 42 0099

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A- 706 951  (J. BOBILLON) <br> * Pages 1,2 * | 1,7 | B 01 D  29/26 <br> B 01 D  29/32 <br> B 01 D  29/42 |
| A | | 2,3 | |
| A | US-A-3 349 919  (D.R. ROYER) <br> * Colonnes 2-3 * | 4-6 | |
| A | GB-A-2 005 357  (P. DE LA PENA) | | |
| A | US-A-4 251 374  (NOBLE CUNNINGHAM) | | |
| A | GB-A-   8 374  (H. BURNETT WATSON)(A.D.1910)) | | |

DOMAINES TECHNIQUES
RECHERCHES (Int. Cl.4)

B 01 D

Le présent rapport a été établi pour toutes les revendications

| Lieu de la recherche | Date d'achèvement de la recherche | Examinateur |
|---|---|---|
| LA HAYE | 24-04-1989 | DE PAEPE P.F.J. |

EPO FORM 1503 03.82 (P0402)